# EUROPÄISCHE PATENTSCHRIFT

(11) **EP 2 510 597 B1**
(45) Veröffentlichungstag und Bekanntmachung des Hinweises auf die Patenterteilung: **17.08.2016**
(21) Anmeldenummer: 10787715.1
(22) Anmeldetag: 22.11.2010
(51) Int. Cl.: H02B 1/052

(54) **EINHÄNGE- UND RASTMECHANISMUS FÜR NORMSCHIENEN**
MOUTING MECHANISM FOR MOUNTING RAIL
MECANISME DE FIXATION POUR RAIL DE SUPPORT

(30) Priorität: 10.12.2009 AT 19502009
(43) Veröffentlichungstag der Anmeldung: 17.10.2012
(73) Patentinhaber: Siemens Aktiengesellschaft, 80333 München (DE)
(72) Erfinder: HOFBAUER, Edwin, A-1120 Wien (AT)
(74) Vertreter: Maier, Daniel Oliver
(86) Internationale Anmeldenummer: PCT/EP2010/067885
(87) Internationale Veröffentlichungsnummer: WO 2011/069810

(56) Entgegenhaltungen:
- FR-A5- 2 030 852
- US-A- 4 067 529
- US-B1- 6 563 697

## Beschreibung

Die Erfindung betrifft einen Einhänge- und Rastmechanismus eines elektrischen oder elektronischen Gerätes zum Befestigen auf einer Normschiene, eine unbewegliche Klaue und eine gegen eine Federkraft bewegliche Klaue umfassend. Als Klaue ist dabei eine hakenförmige Ausbildung bezeichnet.

In Schaltschränken oder sonstigen Elektroinstallationseinrichtungen sind üblicherweise Schienen als Halterungen für diverse elektrische oder elektronische Geräte vorgesehen. Diese Schienen weisen standardisierte Querschnittsmaße auf und werden deshalb auch als Normschienen bezeichnet. Die standardisierten Maße einer Nörmschiene legen dabei die Anschlussformen des Einhänge- und Rastmechanismus eines Gerätes fest, welches auf einer Normschiene montierbar sein soll.

In der Regel umfasst ein derartiger Einhänge- und Rastmechanismus eine gegenüber dem Gerät bzw. einem Gerategehäuse unbewegliche Klaue und eine gegenüber dem Gerät bzw. dem Gerätegehäuse bewegliche Klaue bzw. Klinke. Als Klinke ist dabei ein kurzer, drehbar gelagerter Hebel bezeichnet. Die Rastung des Geräts wird mittels der beweglichen Klaue bzw. Klinke bewerkstelligt. Bei einer Geräteinstallation wird das Gerät üblicherweise mit der oberen Klaue an der Oberseite der Normschiene eingehängt. Im Zuge einer Schwenkbewegung nach unten erfolgt in weiterer Folge die Rastung, indem die bewegliche Klaue bzw. Klinke an der Unterseite der Normschiene einhakt. Die bewegliche Klaue bzw. Klinke wird dabei gegen eine Federkraft nach unten gedrückt, bis die Endposition erreicht ist und die Klaue bzw. Klinke infolge der Federkraft einschnappt. Die untere Schienenkante ist so ausgeführt, dass die bewegliche Klaue mit dieser verhakt.

Zum Lösen des auf diese Weise befestigten Geräts muss die bewegliche Klaue bzw. Klinke entriegelt werden. Dies geschieht im einfachsten Fall durch Aushebeln mittels eines passenden Werkzeugs, z.B. eines Schraubendrehers. Sofern die bewegliche Klaue bzw. Klinke einen aus dem Gehäuse herausragenden Fortsatz aufweist, erfolgt das Entriegeln durch Fingerdruck auf diesen Fortsatz.

Nach dem Stand der Technik (FR2030852) ist die bewegliche Klaue beispielsweise als ein Klinkenschieber in einer Führung an der Rückseite des Gehäuses eingesetzt. Dabei übt eine gegen das Gehäuse abgestützte Feder eine Kraft auf den Klinkenschieber aus.

Der Erfindung liegt die Aufgabe zugrunde, für einen Einhänge- und Rastmechanismus der eingangs genannten Art eine Verbesserung gegenüber dem Stand der Technik anzugeben.

Erfindungsgemäß wird diese Aufgabe gelöst durch eine Anordnung mit den Merkmalen des Anspruchs 1. Dabei ist die bewegliche Klaue relativ zur unbeweglichen Klaue translatorisch bewegbar. Zudem sind die unbewegliche Klaue und die bewegliche Klaue mit einer verbindenden Federstruktur einstückig ausgeführt. Infolge der translatorischen Bewegbarkeit ist eine einstückige Ausführung möglich, welche eine billige und einfache Fertigung sicherstellt.

Eine besonders günstige Fertigung ist gegeben, wenn die unbewegliche Klaue, die bewegliche Klaue und die verbindende Federstruktur als Elemente eines Kunststoffspritzteils ausgeführt sind.

In einer vorteilhaften Ausgestaltung ist vorgesehen, dass die unbewegliche Klaue zwei hakenförmige Fortsätze umfasst, die in eine Oberkante der Normschiene einhängbar sind und dass die bewegliche Klaue zumindest einen hakenförmigen Fortsatz umfasst, welcher an einer Unterkante der Normschiene einrastbar ist. Das Gerät ist somit an zumindest drei Stellen an einer Normschiene anschließbar und auf diese Weise in seiner Lage eindeutig bestimmt.

Für eine einfache Entriegelbarkeit ist die bewegliche Klaue mit einem Betätigungselement starr verbunden. Günstigerweise ist dabei das Betätigungselement in einer Führung parallel zur Bewegungsrichtung der beweglichen Klaue geführt.

Zur einfachen Bedienung der Entriegelung ist das Betätigungselement in Richtung der unbeweglichen Klaue geführt und ragt dabei über diese hinaus. Das Bedienungselement ist somit an der Seite bedienbar, an der sich die unbewegliche Klaue befindet. Diese Seite ist in der Regel gut zugänglich, weil auf dieser Seite bei der Gerätinstallation ein ausreichender Platz zum Schwenken des Gerätes während des Einhängens und Verhakens gegeben sein muss.

Eine vorteilhafte Ausführung sieht weiters vor, dass die verbindende Federstruktur als meanderförmige Federstruktur ausgebildet ist. Eine solche Struktur ist einfach herzustellen, insbesondere mittels eines Kunststoffspritzgussverfahrens.

Die vorteilhafte Ausführung wird weitergebildet, indem die unbewegliche Klaue in wenigstens einen unbeweglichen Steg übergeht und die bewegliche Klaue in wenigstens einen neben dem unbeweglichen Steg angeordneten beweglichen Steg übergeht und indem der bewegliche Steg mittels der meanderförmigen Federstruktur an den unbeweglichen Steg angeschlossen ist. Diese Anordnung bewirkt eine kompakte Ausführung des Einhänge- und Rastmechanismusses mit einem geringen Anteil an einer gesamten Gerätetiefe. Das ist insbesondere der Fall, wenn ein beweglicher Steg mittig zwischen zwei unbeweglichen Stegen angeordnet ist.

Für eine besonders präzise Führung der beweglichen Teile ist vorgesehen, dass die Federstruktur mehrere meanderförmige Federelemente umfasst.

Die Erfindung wird nachfolgend in beispielhafter Weise unter Bezugnahme auf die beigefügte Figur erläutert. Es zeigt in schematischer Darstellung:

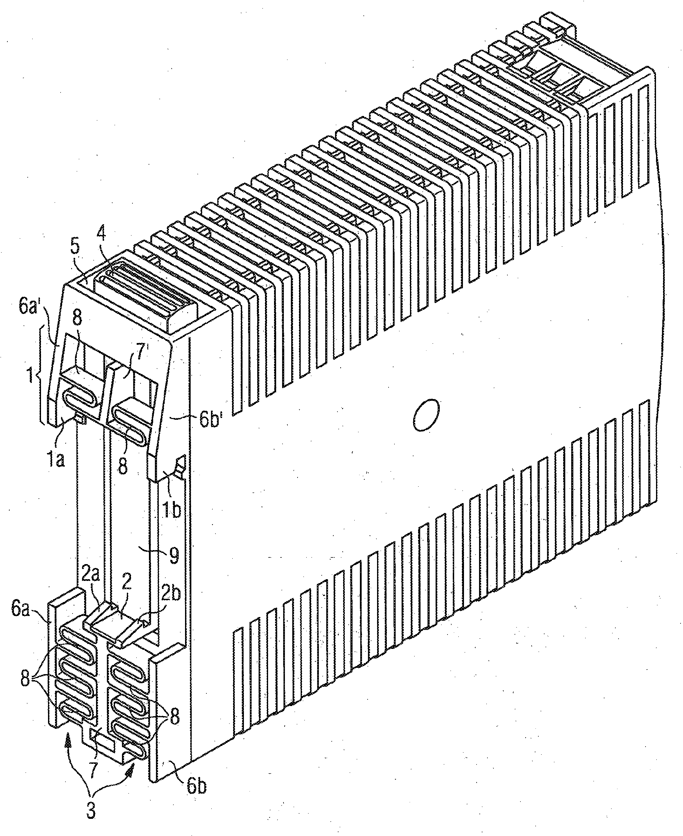

- Fig. 1: Schrägansicht eines Geräts mit einem Einhänge- und Rastmechanismus auf der Geräterückseite.
Dargestellt ist ein elektrisches oder elektronisches Gerät mit einem üblichen im Wesentlichen quaderförmigen Gerätegehäuse. An der Rückseite des Gerätegehäuses befindet sich der Einhänge- und Rastmechanismus zur Gerätebefestigung an einer Normschiene.

Das Gerät ist in der üblichen Einbaulage dargestellt. Der beispielhafte Mechanismus umfasst eine unbewegliche Klaue 1, die in eine Normschienenoberkante einhängbar ist. Dabei sind zwei Fortsätze 1a, 1b ausgebildet, die in einem eingehängten Zustand hinter die Normschienenoberkate greifen und das Gerät in Position halten.

Zum Verhaken an einer Normschienenunterkante ist eine relativ zur unbeweglichen Klaue 1 translatorisch bewegliche Klaue 2 angeordnet. Diese bewegliche Klaue 2 umfasst beispielsweise zwei Fortsätze 2a, 2b, die bei einem befestigten Gerät hinter die Normschienenunterkante greifen. Die zwei Klauen 1, 2 bilden somit Elemente einer Klammer, mit der das Gerät auf der Normschiene montierbar ist.

Die unbewegliche Klaue 1 und die bewegliche Klaue 2 sind mittels einer Federstruktur 3 verbunden, wobei diese Elemente erfindungsgemäß in einem Stück gefertigt sind. Die Federstruktur 3 wirkt dabei einerseits als Rückstellelement, wenn die mit den Klauen 1, 2 gebildete Klammer gespreizt wird. Andererseits erfüllt die Federstruktur 3 vorteilhafterweise eine Führungsfunktion, indem sie die Bewegungsfreiheitsgrade der beweglichen Klaue 2 bestimmt. Optional ist eine Zusätzliche Führung der beweglichen Klaue 2 vorzusehen.

Die Federstruktur 3 ist günstigerweise mittels mehrerer meanderförmiger, im einfachsten Fall s-förmiger Elemente 8 gebildet. Jedes Federelement 8 besteht z.B. aus einem Streifen mit rechteckigem Querschnitt, welcher zwei gegenläufige Biegungen um die Querschnittsachse mit dem kleinsten Widerstandsmoment aufweist. An den Enden und zwischen den Biegungen sind im unbelasteten Zustand zueinander parallele Streifenabschnitte vorhanden.

Dabei ist jedes Federelement 8 mit einem Ende an die bewegliche Klaue 2 und mit dem anderen Ende an die unbewegliche Klaue 1 angeschlossen. Zum Anschluss an die Federelemente 8 gehen die Klauen 1, 2 in wenigstens jeweils einen Steg 6a, 6b, 6a', 6b' bzw. 7, 7' über.

Eine günstige Ausprägung sieht vor, dass jeder Fortsatz 1a, 1b der unbeweglichen Klaue 1 in jeweils einen Steg 6a, 6b bzw. 6a', 6b' übergeht. Jeder Steg 6a, 6b bzw. 6a', 6b' erstreckt sich dabei über die Höhe des Einhänge- und Rastmechanismus und ist dabei durch eine Ausnehmung für die Normschiene in zwei Abschnitte 6a, 6a' bzw. 6b, 6b' aufgeteilt.

Parallel zu diesen unbeweglichen Stegen 6a, 6b, 6a', 6b' ist ein Steg 7, 7' mit der beweglichen Klaue 2 starr verbunden. Dieser Steg 7, 7' verläuft mittig zwischen den beiden unbeweglichen Stegen 6a, 6b, 6a', 6b' und ist ebenfalls durch die Ausnehmung für die Normschiene in zwei Abschnitte 7, 7' aufgeteilt. Diese zwei Abschnitte 7, 7' sind durch eine flache Schiene 9 miteinander verbunden.

In der dargestellten Ausführung sind unterhalb der beweglichen Klaue 2 sechs Federelemente 8 angeordnet. Der bewegliche Steg 7 ist dabei mittels dreier übereinander angeordneter Federelemente 8 an den einen unbeweglichen Steg 6a und mittels dreier übereinander angeordneter Federelemente 8 an den anderen unbeweglichen Steg 6b angeschlossen.

Oberhalb der unbeweglichen Klaue 1 ist der bewegliche Steg 7' mit jeweils einem Federelement 8 an den einen unbeweglichen Steg 6a' und den anderen unbeweglichen Steg 6b' angeschlossen.

Die flache Schiene 9, welche die Abschnitte 7, 7' des beweglichen Stegs verbindet, ist in der dargestellten Ausführung zu einem Betätigungselement 4 verlängert. Dieses Betätigungselement 4 ist in einer an die unbewegliche Klaue 1 anschließende Führung 5 geführt und ragt über die obere Grätegehäusekante hinaus. Auf diese Weise ist eine einfache Zugänglichkeit des Betätigungselements 4 gegeben.

Um einen gleichmäßigen Halt des Gerätes auf einer Normschiene sicherzustellen, ist der Einhänge- und Rastmechanismus günstigerweise symmetrisch zur Hauptmittelebene des Gerätes aufgebaut.

## Patentansprüche

1. Einhänge- und Rastmechanismus eines elektrischen oder elektronischen Gerätes zum Befestigen auf einer Normschiene, eine unbewegliche Klaue (1) und eine gegen eine Federkraft bewegliche Klaue (2)umfassend, wobei die bewegliche Klaue (2) relativ zur unbeweglichen Klaue (1) translatorisch bewegbar ist, wobei die unbewegliche Klaue (1) und die bewegliche Klaue (2) mit einer verbindenden Federstruktur (3) einstückig ausgeführt sind und wobei die bewegliche Klaue (2) mit einem Betätigungselement (4) starr verbunden ist **dadurch gekennzeichnet, dass** das Betätigungselement (4) in Richtung der unbeweglichen Klaue (1) geführt ist und dabei über diese hinausragt.

2. Einhänge- und Rastmechanismus nach Anspruch 1, **dadurch gekennzeichnet, dass** die unbewegliche Klaue (1), die bewegliche Klaue (2) und die verbindende Federstruktur (3) als Elemente eines Kunststoffspritzteils ausgeführt sind.

3. Einhänge- und Rastmechanismus nach Anspruch 1 oder 2, **dadurch gekennzeichnet, dass** die unbewegliche Klaue (1) zwei hakenförmige Fortsätze (1a, 1b) umfasst, die in eine Oberkante der Normschiene einhängbar sind und dass die bewegliche Klaue (2) zumindest einen hakenförmigen Fortsatz (2a, 2b) umfasst, welcher an einer Unterkante der Normschiene einrastbar ist.

4. Einhänge- und Rastmechanismus nach Anspruch 1, **dadurch gekennzeichnet, dass** das Betätigungselement (4) in einer Führung (5) parallel zur Bewegungsrichtung der beweglichen Klaue (2) geführt ist.

5. Einhänge- und Rastmechanismus nach einem der Ansprüche 1 bis 4, **dadurch gekennzeichnet, dass** die verbindende Federstruktur (3) als meanderförmige Federstruktur ausgebildet ist.

6. Einhänge- und Rastmechanismus nach Anspruch 5, **dadurch gekennzeichnet, dass** die unbewegliche Klaue (1) in wenigstens einen unbeweglichen Steg (6a, 6b, 6a', 6b') übergeht und die bewegliche Klaue (2) in wenigstens einen neben dem unbeweglichen Steg (6a, 6b, 6a', 6b') angeordneten beweglichen Steg (7, 7') übergeht und dass der bewegliche Steg (6a, 6b, 6a', 6b') mittels der meanderförmigen Federstruktur an den unbeweglichen Steg (7, 7') angeschlossen ist.

7. Einhänge- und Rastmechanismus nach Anspruch 6, **dadurch gekennzeichnet, dass** ein beweglicher Steg (7, 7') mittig zwischen zwei unbeweglichen Stegen (6a, 6b, 6a', 6b') angeordnet ist.

8. Einhänge- und Rastmechanismus nach einem der Ansprüche 5 bis 7, **dadurch gekennzeichnet, dass** die Federstruktur (3) mehrere meanderförmige Federelemente (8) umfasst.

## Claims

1. Mounting and latching mechanism of an electrical or electronic device for fastening on a standard rail, including an immoveable claw (1) and a claw (2) which is moveable against a spring force, wherein the moveable claw (2) can be translationally moved relative to the immoveable claw (1), wherein the immoveable claw (1) and the moveable claw (2) are embodied in one piece with a connecting spring structure (3) and wherein the moveable claw (2) is rigidly connected to an actuation element (4), **characterised in that** the actuation element (4) is guided in the direction of the immoveable claw (1) and in this way protrudes therebeyond.

2. Mounting and latching mechanism according to claim 1, **characterised in that** the immoveable claw (1), the moveable claw (2) and the connecting spring structure (3) are embodied as elements of a plastic injection-moulded part.

3. Mounting and latching mechanism according to claim 1 or 2, **characterised in that** the immoveable claw (1) includes two hook-type appendages (1a, 1b), which can be mounted in an upper edge of the standard rail and that the moveable claw (2) includes at least one hook-type appendage (2a, 2b), which can be engaged on a lower edge of the standard rail.

4. Mounting and latching mechanism according to claim 1, **characterised in that** the actuation element (4) is guided in a guidance (5) in parallel with the direction of motion of the moveable claw (2).

5. Mounting and latching mechanism according to one of claims 1 to 4, **characterised in that** the connecting spring structure (3) is embodied as a meander-type spring structure.

6. Mounting and latching mechanism according to claim 5, **characterised in that** the immoveable claw (1) passes into at least one immoveable web (6a, 6b, 6a', 6b') and the moveable claw (2) passes into at least one moveable web (7, 7') arranged adjacent to the immoveable web (6a, 6b, 6a', 6b') and that the moveable web (6a, 6b, 6a', 6b') is connected to the immovable web (7, 7') by means of the meander-type spring structure.

7. Mounting and latching mechanism according to claim 6, **characterised in that** a moveable web (7, 7') is arranged centrally between two immoveable webs (6a, 6b, 6a', 6b').

8. Mounting and latching mechanism according to one of claims 5 to 7, **characterised in that** the spring structure (3) includes several meander-type spring elements (8).

## Revendications

1. Mécanisme d'accrochage et d'encliquetage d'un appareil électrique ou électronique à fixer sur un rail normalisé, comprenant une patte immobile (1) et une patte (2) mobile à l'encontre d'une force de ressort, dans lequel la patte mobile (2) est mobile par translation par rapport à la patte immobile (1), dans lequel la patte immobile (1) et la patte mobile (2) sont réalisées d'un seul tenant avec une structure à ressort assurant une liaison et dans lequel la patte mobile (2) est reliée rigide à un élément d'actionnement (4), **caractérisé en ce que** l'élément d'actionnement (4) est guidé en direction de la patte immobile (1) et dépasse de celle-ci.

2. Mécanisme d'accrochage et d'encliquetage selon la revendication 1, **caractérisé en ce que** la patte immobile (1), la patte mobile (2) et la structure à ressort (3) assurant une liaison sont réalisées en tant qu'éléments d'une pièce injectée en matière plastique.

3. Mécanisme d'accrochage et d'encliquetage selon la revendication 1 ou 2, **caractérisé en ce que** la patte immobile (1) comprend deux appendices (1a, 1b) en forme de crochet, qui peuvent être accrochés à un bord supérieur du rail normalisé et la patte mobile (2) comprend au moins un appendice (2a, 2b) en forme de crochet, qui peut être encliqueté au niveau d'un bord inférieur du rail normalisé.

4. Mécanisme d'accrochage et d'encliquetage selon la revendication 1, **caractérisé en ce que** l'élément d'actionnement (4) est guidé dans un guide (5) parallèlement à une direction de déplacement de la patte mobile (2).

5. Mécanisme d'accrochage et d'encliquetage selon l'une quelconque des revendications 1 à 4, **caractérisé en ce que** la structure à ressort (3) assurant une liaison est réalisée en tant que structure à ressort sinueuse.

6. Mécanisme d'accrochage et d'encliquetage selon la revendication 5, **caractérisé en ce que** la patte immobile (1) devient au moins un pan immobile (6a, 6b, 6a', 6b') et la patte mobile (2) devient au moins un pan mobile (7, 7') agencé à côté du pan immobile (6a, 6b, 6a', 6b') et le pan mobile (6a, 6b, 6a', 6b') est raccordé au pan immobile (7, 7') au moyen de la structure à ressort sinueuse.

7. Mécanisme d'accrochage et d'encliquetage selon la revendication 6, **caractérisé en ce qu'**un pan mobile (7, 7') est agencé de manière centrale entre deux pans immobiles (6a, 6b, 6a', 6b').

8. Mécanisme d'accrochage et d'encliquetage selon l'une quelconque des revendications 5 à 7, **caractérisé en ce que** la structure à ressort (3) comprend plusieurs éléments sinueux formant ressort (8).
